# EUROPEAN PATENT APPLICATION

(11) **EP 2 854 070 A1**
(43) Date of publication of application: **01.04.2015**
(21) Application number: 14182412.8
(22) Date of filing: 27.08.2014
(51) Int. Cl.: G06F 21/64, G06F 21/54, G06F 21/12, G06F 21/51

(54) **Method and apparatus of creating application package, method and apparatus of executing application package, and recording medium storing application package**

(30) Priority: 27.09.2013 KR 20130115578
(71) Applicant: Samsung Electronics Co., Ltd, Gyeonggi-do 443-742 (KR)
(72) Inventor: Shim, Woo-chul, Gyeonggi-do (KR); Kim, Bong-seon, Gyeonggi-do (KR)
(74) Representative: Appleyard Lees

(57) **Abstract**

A non-transitory computer readable recording medium has stored thereon an application package including at least one file, the application package including an executable file created by compiling a program code, a manifest file including a hash value of the at least one file included in the application package, a digest information file including a hash value of the manifest file, a certificate file including a hash value of the digest information file, the hash value of the digest information file being digitally signed using a private key, security information including a public key corresponding to the private key, the security information being encrypted using an encryption key, and a native library including an application programming interface (API) configured to execute the executable file.

## Description

### BACKGROUND

### 1. Field

One or more exemplary embodiments relate to recording media configured to store application packages, methods and apparatuses of creating application packages, and methods and apparatuses of executing application packages, and more particularly, to recording media configured to store application packages capable of preventing the application packages from being tampered with and improving security of the application packages, methods and apparatuses of creating application packages, and methods and apparatuses of executing application packages.

### 2. Description of the Related Art

With the development of communication technology and the miniaturization of electronic devices, personal terminal devices are being widely used. Recently, personal portable terminal devices such as smart phones or smart pads have come into widespread use. The Android operating system is one of the most popular operating systems run on smart phones or smart pads.

A variety of applications running on platforms of personal terminal devices have been developed under environments of the personal portable devices. For example, a variety of Android applications that can be run on Android platforms have been developed.

The Android application market is on the rise. Accordingly, vehicle mounted terminals running on the Android platform, in addition to the portable terminal devices running on Android platforms, have been introduced.

Android applications may be made and distributed in the form of application packages. An application package may include at least one component. The application package may include a certificate file, a digest information file, and a manifest file. The application package may also include an executable file and a native library.

However, an executable file compiled from a program written using Java language may be efficiently decompiled. Thus, a third party may tamper with the executable file and repackage the application package. Furthermore, since the native library independently operates, when the tampered executable file and the native library are repackaged, the repackaged application package may be installed and executed without any trouble. The repackaged application package may also use the native library without any trouble.

Thus, malicious codes may be easily distributed through application packages which have been tampered with. Therefore, the security of a user's information may be threatened, for example, through leakage of personal information.

### SUMMARY

One or more exemplary embodiments include recording media configured to store application packages capable of preventing tampering of the application packages, methods and apparatuses of creating application packages, and methods and apparatuses of executing application packages.

One or more exemplary embodiments include recording media configured to store application packages capable of preventing tampered application packages from being executed, methods and apparatuses of creating application packages, and methods and apparatuses of executing application packages.

One or more exemplary embodiments include recording media configured to store application packages capable of improving security of the application packages, methods and apparatuses of creating application packages, and methods and apparatuses of executing application packages.

Additional aspects will be set forth in part in the description which follows and, in part, will be apparent from the description, or may be learned by practice of the presented exemplary embodiments.

According to an aspect of one or more exemplary embodiments, there may be provided a non-transitory computer readable recording medium having stored thereon application package including at least one file, wherein the application package includes an executable file created by compiling a program code, a manifest file including a hash value of the at least one file included in the application package, a digest information file including a hash value of the manifest file, a certificate file including a hash value of the digest information file digitally signed using a private key, security information including a public key corresponding to the private key, the security information being encrypted using an encryption key, and a native library including an application programming interface (API) configured to execute the executable file.

The security information may further include a list of integrity verification target files among the at least one file included in the application package when the native library is called, wherein the public key and the list of the integrity verification target files are encrypted using the encryption key.

The native library may include logic configured to verify integrity of at least one of the integrity verification target files included in the list when the API is called by the executable file.

The native library may include encryption key information corresponding to the encryption key.

The encryption key information may include information converted by the encryption key or information created using the encryption key.

The native library may include logic configured to verify integrity of the at least one file included in the application package when the API is called by the executable file. According to another aspect of one or more exemplary embodiments, there may be provided a method of creating an application package including preparing the application package including at least one file, a native library, and a certificate file digitally signed using a private key, inserting logic configured to verify integrity of the at least one file into the native library when the native library is called, creating an encryption key and inserting encryption key information corresponding to the encryption key into the native library, creating security information including a public key corresponding to the private key, encrypting the security information using the encryption key, and inserting the encrypted security information into the application package.

The inserting of logic may include replacing the native library included in the application package with another native library into which the logic is inserted.

The encryption key information may include information converted by the encryption key or information created using the encryption key.

The creating of the security information may include creating the security information to include a list of integrity verification target files among the at least one file when the native library is called, and the public key.

The inserting of the encrypted security information into the application package may include adding the encrypted security information to the application package, and repackaging the application package.

According to another aspect of one or more exemplary embodiments, there may be provided a method of executing an application package including an executable file, a native library, and at least one file, the method including executing the executable file, calling the native library, and verifying integrity of the at least one file.

The application package may include a manifest file including a first hash value, the first hash value being a hash valve of the at least one file, a digest information file including a second hash value, the second hash value being a hash value of the manifest file, a certificate file including a third hash value, the third hash value being a hash value of the digest information file and digitally signed using a private key, and security information including a public key corresponding to the private key, the security information being encrypted using an encryption key, wherein the native library includes encryption key information corresponding to the encryption key.

The verifying of integrity may include acquiring the encryption key by using the encryption key information, decrypting the encrypted security information by using the acquired encryption key, decrypting the third hash value by using the public key included in the decrypted security information, and creating a fourth hash value by using the digest information file and comparing the fourth hash value with the decrypted third hash value.

The verifying of integrity may further include creating a fifth hash value using the manifest file and comparing the fifth hash value with the second hash value.

The verifying of integrity may further include creating a fifth hash value by using the at least one file and comparing the fifth hash value with the first hash value.

The security information may further include a list of integrity verification target files among the at least one file included in the application package when the native library is called, the public key and the list of the integrity verification target files included in the security information may be encrypted using the encryption key, and the verifying of integrity may further include creating a fifth hash value by using a file included in the list of the integrity verification target files and comparing the fifth hash value with the first hash value.

The verifying of integrity may further include storing the fifth hash value.

The verifying of integrity may further include confirming whether a stored hash value of the at least one file included in the application package exists as a result of previous integrity verification of the at least one file included in the application package, creating a hash value by using the at least one file included in the application package when the confirming indicates that the stored hash value exists, and comparing the created hash value with the stored hash value.

The security information may further include a list of integrity verification target files among the at least one file included in the application package when the native library is called, the public key and the list included in the security information may be encrypted using the encryption key, and the creating of the hash value may include creating the hash value using one of the integrity verification target files included in the list.

According to the present invention there is provided an apparatus and method as set forth in the appended claims. Other features of the invention will be apparent from the dependent claims, and the description which follows.

### BRIEF DESCRIPTION OF THE DRAWINGS

These and/or other aspects will become apparent and more readily appreciated from the following description of the exemplary embodiments, taken in conjunction with the accompanying drawings in which:
FIG. 1 is a block diagram of an application package according to an exemplary embodiment;
FIG. 2 illustrates an extensible markup language (XML) code corresponding to a list of integrity verification target files included in an application package according to an exemplary embodiment;
FIG. 3 is a flowchart of a method of creating an application package according to an exemplary embodiment;
FIG. 4 is a block diagram of an apparatus for creating an application package according to an exemplary embodiment;
FIG. 5 is a flowchart of a method of executing an application package according to an exemplary embodiment;
FIG. 6 is a flowchart of a process of verifying integrity according to an exemplary embodiment;
FIG. 7 is a flowchart of a process of verifying integrity according to another exemplary embodiment; and
FIG. 8 is a block diagram of an apparatus for executing an application package according to an exemplary embodiment.

### DETAILED DESCRIPTION

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present description. Like reference numerals denote like elements. Expressions such as "at least one of," when preceding a list of elements, modify the entire list of elements and do not modify the individual elements of the list.

It will be understood that although the terms "first" and "second" are used to describe various components, these components should not be limited by these terms. These terms may be used to distinguish one of the components from another component. Thus, throughout the specification, a first component may indicate a second component without conflicting with the present invention.

Throughout the specification, a singular form may include plural forms, unless there is a particular description contrary thereto. Throughout the specification, a singular form may include plural forms, unless there is a particular description contrary thereto. Also, terms such as "comprise" or "comprising" are used to specify existence of a recited form, a number, a process, an operation, a component, and/or groups thereof, not excluding the existence of one or more other recited forms, one or more other numbers, one or more other processes, one or more other operations, one or more other components and/or groups thereof.

Unless expressly described otherwise, all terms including descriptive or technical terms which are used herein should be construed as having meanings that are obvious to one of ordinary skill in the art. Also, terms that are defined in a general dictionary and that are used in the following description should be construed as having meanings that are equivalent to meanings used in the related description, and unless expressly described otherwise herein, the terms should not be construed as being ideal or excessively formal.

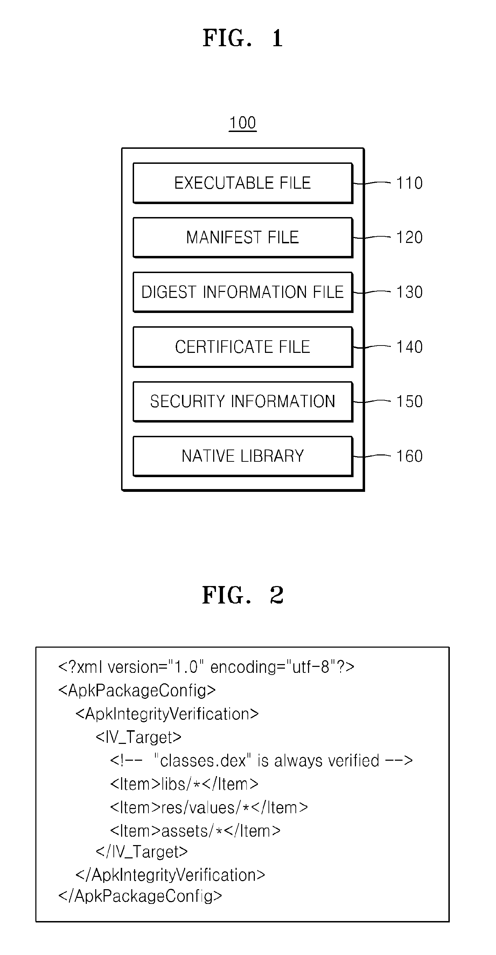

Hereinafter, a recording medium storing an application package 100 according to an exemplary embodiment, a method of creating an application package and an apparatus for creating the application package 200, and a method of executing an application package and an apparatus for executing the application package 300 will be described in detail with reference to FIGS. 1 to 8.

FIG. 1 is a block diagram of the application package 100 according to an exemplary embodiment. Referring to FIG. 1, the application package 100 may include an executable file 110, a manifest file 120, a digest information file 130, a certificate file 140, security information 150, and a native library 160. The application package 100 may further include a resource file.

The executable file 110 may be created by compiling a program code. The executable file 110 may be created by compiling a program code written using Java language such that the program code may be executed in an apparatus for executing an application package 100. The executable file 110 may be created by compiling a program code to be executed in a Dalvik machine. The executable file 110 may include at least one instruction executed by the Dalvik machine. The executable file 110 may have a file extension ending in .dex. For example, the executable file 110 may have a filename "classes.dex".

The manifest file 120 may include a hash value of each of the files included in the application package 100. The manifest file 120 may also include location information of each of the components of the application package 100. For example, the manifest file 120 may have a file name "manifest.mf'.

The digest information file 130 may include a hash value of the manifest file 120. The digest information file 130 may also include SHA-1 digest information of each of the resource files included in the application package 100. For example, the digest information file 130 may have a file name "cert.sf".

The certificate file 140 may include a hash value of the digest information file 130, digitally signed using a private key. The hash value of the digest information file 130 may be digitally signed using a private key of a developer. The certificate file 140 may include a digitally signed hash value. In addition, the certificate file 140 may further include a public key corresponding to the private key. For example, the certificate file 140 may have a file name "cert.rsa".

The security information 150 may include a public key corresponding to the private key and may be encrypted using an encryption key. The security information 150 may include a public key of a developer corresponding to the private key. The security information 150 may further include a list of integrity verification target files selected from files included in the application package 100 whenever the native library 160 is called.

FIG. 2 illustrates an extensible markup language (XML) code corresponding to a list of integrity verification target files. For example, the XML code illustrated in FIG. 2 may be written using XML. The integrity verification target file list may be created via conversion of the XML code. The XML code may be created or modified by a developer. The integrity verification target file list may also be created or modified by the developer.

Integrity of each file included in the integrity verification target file list may be verified whenever the native library 160 is called. As the number of files included in the integrity verification target file list increases, the time required to verify integrity of the files when the native library 160 is called may increase.

Referring to FIG. 2, the integrity verification target files may be defined using an "Item" tag. According to the exemplary embodiment illustrated in FIG. 2, the integrity verification target files may be defined as all sub-directories and sub-files of a "libs" directory of the application package 100. In addition, the integrity verification target files may be defined as all sub-directories and sub-files contained in a "values" directory contained in a "res" directory of the application package 100. In addition, the integrity verification target files may be defined as all sub-directories and sub-files contained in an "assets" directory of the application package 100. In addition, integrity of the executable file 110 may be verified whenever the native library 160 is called.

The security information 150 may be encrypted using an encryption key. For example, the security information 150 may be encrypted using Advanced Encryption Standard (AES), Data Encryption Standard (DES), or any other encryption algorithms. Thus, the public key and the integrity verification target file list of the security information 150 may be encrypted.

The native library 160 may include an application programming interface (API) to execute the executable file 110. For example, the native library 160 may be created by compiling a program code written using C language or C++ language, although is not limited thereto, and other languages may be used instead of or in addition to C language or C++ language. The native library 160 may include at least one instruction.

The native library 160 may also include information corresponding to the encryption key. The native library 160 may include information corresponding to the encryption key used to encrypt the security information 150. For example, information corresponding to the encryption key may include information converted by the encryption key or information created using the encryption key. Accordingly, a hacker or cracker cannot acquire the encryption key by analyzing the native library 160.

In addition, the native library 160 may include logic for verifying the integrity of each of the files of the integrity verification target file list whenever the API is called by the executable file 110. The logic may be included in at least one portion of the API of the native library 160.

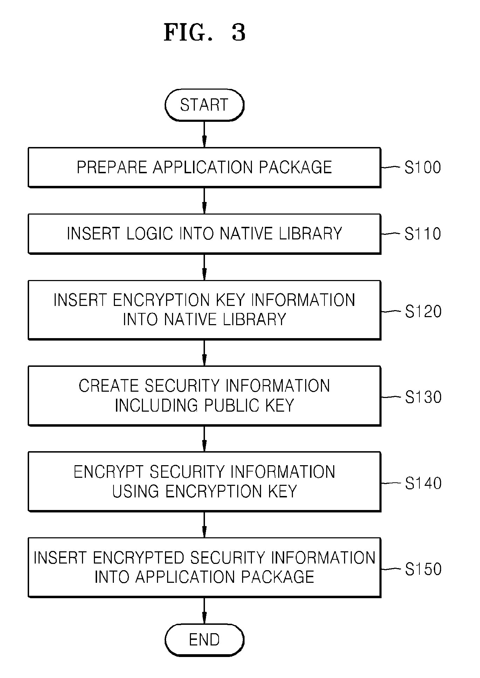

FIG. 3 is a flowchart of a method of creating an application package according to an exemplary embodiment. Referring to FIG. 3, first, an application package may be prepared (operation S100) according to a method of creating an application package.

The prepared application package may be an application package made and distributed by a developer. According to an exemplary embodiment, the application package may include at least one component. The application package may not include components included in the application package 100 according to the previous exemplary embodiment.

The application package may include at least one file. For example, the file may include an executable file or a resource file. The application package may also include a native library. The application package may also include a manifest file including a hash value. The application package may also include a digest information file including a hash value of the manifest file. The application package may also include a certificate file. The certificate file may include a hash value digitally signed using a private key of the developer. The digitally signed hash value may be a hash value of the digest information file.

Then, logic may be inserted into the native library (operation S110). The logic may be logic for verifying integrity of at least one file among the files included in the application package when the native library is called. The logic may be logic for verifying integrity of at least one file among the files included in the application package when the API of the native library is called by the executable file of the application package.

In order to insert the logic into the native library, the native library may be re-compiled. In addition, according to another exemplary embodiment, the native library included in the application package may be replaced with another native library into which the logic is inserted.

Then, an encryption key is created, and encryption key information corresponding to the encryption key may be inserted into the native library (operation S120). For example, an encryption key may be created according to AES, DES, or any other algorithms for encrypting the encryption key. In addition, information corresponding to the created encryption key may be inserted into the native library. Information corresponding to the encryption key may include information converted by the encryption key or information created using the encryption key.

Then, security information including a public key corresponding to the private key may be created (operation S130). The created security information may include a public key corresponding to a private key of the developer. The created security information may further include a list of integrity verification target files among the files included in the application package when the native library is called.

Then, the security information may be encrypted using the encryption key (operation S140). For example, the security information may be encrypted according to AES, DES, or any other algorithms for encrypting the encryption key.

Then, the encrypted security information may be inserted into the application package (operation S150). The encrypted security information may be inserted into the application package as a file. In order to insert the encrypted security information into the application package, the application package may be repackaged.

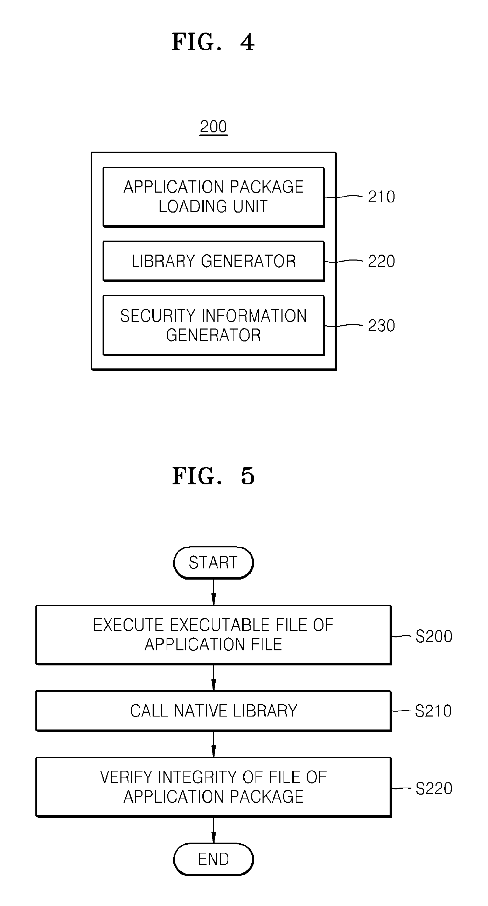

FIG. 4 is a block diagram of an apparatus for creating an application package 200 according to an exemplary embodiment. Referring to FIG. 4, the application package creating apparatus 200 may include an application package loading unit 210, a library generator 220, and a security information generator 230.

The application package loading unit 210 may load the application package into a memory. The application package may be an application package made and distributed by a developer. The application package may not include components included in the application package 100 according to the previous exemplary embodiment. The operation of the application package loading unit 210 may correspond to the preparing of the application package (operation S100) described above with reference to FIG. 3, and therefore a detailed description thereof will not be repeated here.

The library generator 220 may insert logic into a native library included in the loaded application package. The logic may be logic for verifying integrity of at least one file among the files included in the application package when the native library is called. The library generator 220 may recompile the native library to insert logic into the native library. According to another exemplary embodiment, the library generator 220 may replace the native library included in the application package with another native library into which different logic is inserted.

In addition, the library generator 220 may create an encryption key. The library generator 220 may insert information corresponding to the encryption key into the native library. Information corresponding to the encryption key may include information converted by the encryption key or information created using the encryption key.

Operation of the library generator 220 may correspond to the inserting of the logic into the native library (operation S110) and the inserting of information corresponding to the encryption key into the native library (operation S120) described above with reference to FIG. 3, and thus, a detailed description thereof will not be repeated here.

The security information generator 230 may create security information. The security information may include a public key. The public key may correspond to the private key used to digitally sign the hash value of the digest information file of the loaded application package. The security information may further include a list of integrity verification target files selected from among the files included in the loaded application package when the native library is called.

The security information generator 230 may encrypt the security information by using the encryption key created by the library generator 220. The security information generator 230 may also insert the encrypted security information into the application package after the application package has been loaded. The encrypted security information may be inserted into the loaded application package as a file. In order to insert the encrypted security information into the application package, the loaded application package may be repackaged.

Operation of the security information generator 230 may correspond to the creating of the security information (operation S130) and the inserting of the encrypted security information into the application package (operation S150) described above with reference to FIG. 3, and thus, a detailed description thereof will not be repeated here.

FIG. 5 is a flowchart of a method of executing an application package according to an exemplary embodiment. Referring to FIG. 5, according to the method of executing the application package, first, an executable file 110 included in the application package 100 may be executed (operation S200).

The application package 100 may include the executable file 110. For example, the executable file 110 may have a filename "classes.dex". The executable file 110 may include at least one instruction. Thus, instructions of the executable file 110 may be executed.

The executable file 110 may be cached. Accordingly, the executable file 110 may be converted into an odex file, for example. The odex file may include at least one instruction. Instructions of the odex file may correspond to instructions of the executable file 110. Thus, according to another exemplary embodiment, instructions that are included in the odex file converted from the executable file 110 and correspond to the instructions of the executable file 110 may be executed.

Then, the native library 160 included in the application package 100 may be called (operation S210). The native library 160 may include an API required to execute the executable file 110 or the odex file corresponding to the executable file 110. Thus, the API included in the native library 160 may be called.

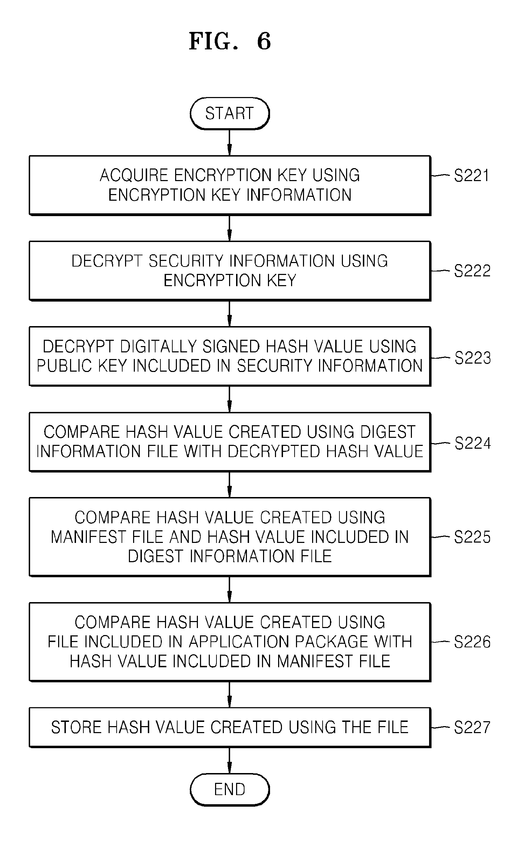

Then, integrity of at least one file among the files included in the application package 100 may be verified (operation S220). FIG. 6 is a flowchart of a process of verifying integrity (operation S220) according to an exemplary embodiment.

Referring to FIG. 6, which depicts an exemplary embodiment of the operation of verifying the integrity of a file of the application package (operation S220 in FIG. 5), first, the encryption key may be acquired using information corresponding to the encryption key included in the native library 160 (operation S221).

Then, the encrypted security information 150 included in the application package 100 may be decrypted using the acquired encryption key (operation S222). When the encryption key is a symmetric key, the security information 150 encrypted using a symmetric key may be decrypted using the symmetric key.

Then, the digitally signed hash value included in the certificate file 140 of the application package 100 may be decrypted using the public key included in the decrypted security information 150 (operation S223). Since the hash value of the digest information file 130 included in the certificate file 140 is digitally signed using the private key, the digitally signed hash value may be decrypted using the public key corresponding to the private key.

If the application package 100 is tampered with by a hacker or cracker, the digitally signed hash value included in the certificate file 140 may not be decrypted using the public key included in the security information 150.

Then, the hash value created using the digest information file 130 of the application package 100 may be compared with the decrypted hash value (operation S224). If the application package 100 is tampered with by a hacker or cracker, the hash value created using the digest information file 130 of the application package 100 and the decrypted hash value (acquired from operation S223) may be different from each other.

Then, the hash value created using the manifest file 120 of the application package 100 may be compared with the hash value included in the digest information file (operation S225). If the application package 100 is tampered with by a hacker, the hash value created using the manifest file 120 of the application package 100 and the hash vale included in the digest information file 130 may be different from each other.

Then, the hash value created using the file included in the application package 100 may be compared with the hash value included in the manifest file 120 (operation S226). The hash value created using each of the files included in the application package 100 may be compared with the hash value corresponding to each file and included in the manifest file 120. If the application package 100 is tampered with by a hacker, the hash value created using each of the files included in the application package and the hash value corresponding to each file and included in the manifest file 120 may be different from each other.

According to another exemplary embodiment, the hash value may be created using a file which is included in the integrity verification target file list selected from the files included in the application package 100. The decrypted security information 150 may include the integrity verification target file list. The created hash value may be compared with the hash value included in the manifest file 120. If the application package 100 is tampered with by a hacker or cracker, the hash value created using a file which is included in the integrity verification target file list selected from the files included in the application package 100 and the hash value included in the manifest file 120 may be different from each other.

When it is determined that a hash value created using a file such as the digest information file 130, the manifest file 120 or each of the files included in the application package is the same as a reference hash value such as the decrypted hash value, which is the hash value included in the digest information file 130, the hash value included in the manifest file 120 or the hash value corresponding to each file and included in the manifest file 120 based on any of the above comparisons, it may be determined that integrity verification of the application package 100 is completed.

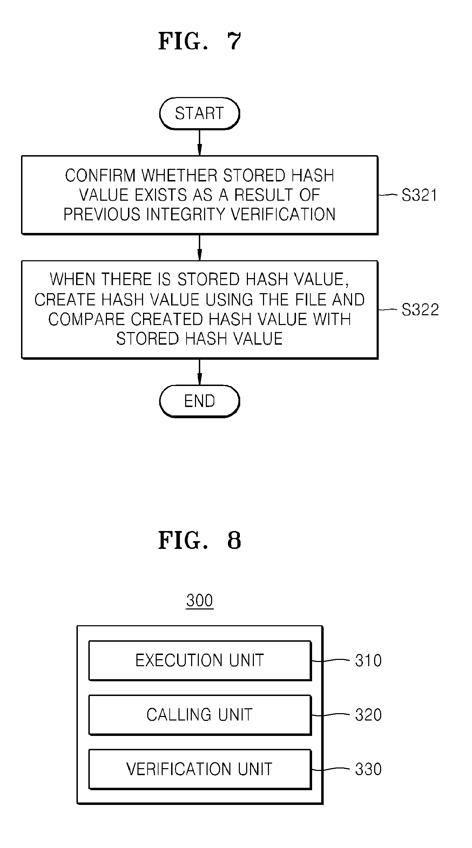

Then, the hash values created using the files may be stored (operation S227). A process of using the stored hash value will be described with reference to FIG. 7.

FIG. 7 is a flowchart of a process of verifying the integrity of a file of an application package (operation S220 in FIG. 5) according to another exemplary embodiment. Referring to FIG. 7, first, it is confirmed whether a hash value stored in the file exists as a result of a previously performed integrity verification of the file (operation S321). If integrity verification of the file is performed for the first time by calling the native library 160 for the first time, it may be confirmed that there is no stored hash value. If integrity verification of the file has previously been performed, for example, it may be confirmed that the storing of the hash value (operation S227) described above with reference to FIG. 6 has been performed. Thus, it may be confirmed that there is a stored hash value.

Then, when the file has a stored hash value, an additional hash value is created using the file, and the created hash value may be compared with the stored hash value (operation S322). A hash value may additionally be created using each of the files included in the application package 100. For each of the files included in the application package 1000, a created hash value may be compared with a stored hash value. If the application package 100 is tampered with by a hacker or cracker, for each of the files, the created hash value may be different than the stored hash value, thereby providing enhanced security.

If the file does not have a stored hash value, the acquiring of the encryption key (operation S221) or the storing of the hash value (operation S227) described above with reference to FIG. 6 may be performed.

In other words, if there is a stored hash value of the file, integrity verification may be more simply performed compared to integrity verification when there is no stored hash value. If integrity verification of the file has previously been performed, the decrypting of the digitally signed hash value included in the certificate file 140 (operation S223) described above with reference to FIG. 6 may not be performed. The decryption of the digitally signed hash value included in the certificate file 140 (operation S223) may take a long time. Thus, if the file has a stored hash value, integrity verification (operation S220) may be more quickly performed compared to integrity verification when there is no stored hash value.

According to another exemplary embodiment, when the file has a stored hash value, a hash value may additionally be created in the file by using a file of the integrity verification target file list. In addition, the created hash value may be compared with the stored hash value. If the application package 100 is tampered with by a hacker or cracker, the created hash value and the stored hash value may be different from each other.

According to the method of executing the application package as described above, integrity of files included in the application package 100 may be verified whenever the native library 160 is called. In other words, whenever the application is executed, integrity of the files included in the application package 100 may be verified. Thus, even if the application package 100 is tampered with by an attack from a hacker or virus after the application package 100 is installed, execution of the application package 100 which has been tampered with may be prevented.

According to a method of executing the application package according to an exemplary embodiment, integrity of files included in the application package 100 is verified using the public key included in the encrypted security information 150, and thus the application package 100 may be prevented from being tampered with. In addition, security of the application package 100 may be improved.

FIG. 8 is a block diagram of an apparatus for executing an application package executing apparatus 300 according to an exemplary embodiment. Referring to FIG. 8, the application package executing apparatus 300 may include an execution unit 310 (e.g., executor), a calling unit 320 (e.g., caller), and a verification unit 330 (e.g., verifier).

The execution unit 310 may execute the executable file 110 included in the application package 100. Operation of the execution unit 310 may correspond to the executing of the executable file 110 (operation S200) described above with reference to FIG. 5, and a detailed description thereof will not be repeated here.

The calling unit 320 may call the native library 160 required to execute the executable file 110. The operation of the calling unit 320 may correspond to calling of the native library 160 (operation S210) described above with reference to FIG. 5, and a detailed description thereof will not be repeated here.

The verification unit 330 may verify the integrity of at least one of the files included in the application package 100 when the native library 160 is called. The operation of the verification unit 330 may correspond to the verifying of integrity (operation S220) described above with reference to FIGS. 5 to 7, and a detailed description thereof will not be repeated here.

According to the illustrated exemplary embodiments, the application package may be prevented from being tampered with. Furthermore, execution of an application package that has been tampered with may be prevented. Thus, security of the application package may be improved.

As described above, according to the one or more of the above exemplary embodiments, the application package may be prevented from being tampered with. Furthermore, execution of an application package that has been tampered with may be prevented.

Thus, security of the application package may be improved.

It should be understood that the exemplary embodiments described therein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A non-transitory computer readable recording medium having stored thereon an application package comprising at least one file,
wherein the application package comprises:
an executable file created by compiling a program code;
a manifest file comprising a hash value of the at least one file included in the application package;
a digest information file comprising a hash value of the manifest file;
a certificate file comprising a hash value of the digest information file, the hash value of the digest information file being digitally signed using a private key;
security information which comprises a public key corresponding to the private key, the security information being encrypted using an encryption key; and
a native library comprising an application programming interface (API) configured to execute the executable file.

2. The storage medium of claim 1, wherein the security information further comprises a list of integrity verification target files among the at least one file included in the application package when the native library is called,
wherein the public key and the list of the integrity verification target files are encrypted using the encryption key.

3. The storage medium of claim 2, wherein the native library comprises logic configured to verify integrity of at least one of the integrity verification target files included in the list when the API is called by the executable file.

4. The storage medium of claim 1, wherein the native library comprises encryption key information corresponding to the encryption key.

5. The storage medium of claim 1, wherein the native library comprises logic configured to verify integrity of the at least one file included in the application package when the API is called by the executable file.

6. A method of creating an application package, the method comprising:
preparing the application package comprising at least one file, a native library, and a certificate file, the certificate file being digitally signed using a private key;
inserting logic configured to verify integrity of the at least one file into the native library when the native library is called;
creating an encryption key and inserting encryption key information corresponding to the encryption key into the native library;
creating security information which comprises a public key corresponding to the private key;
encrypting the security information by using the encryption key; and
inserting the encrypted security information into the application package.

7. The method of claim 6, wherein the inserting of the logic comprises replacing the native library comprised in the application package with another native library into which the logic is inserted.

8. The method of claim 6, wherein the encryption key information comprises information converted by the encryption key or information created using the encryption key.

9. The method of claim 6, wherein the creating of the security information comprises creating the security information to comprise:
a list of integrity verification target files among the at least one file when the native library is called, and
the public key.

10. The method of claim 6, wherein the inserting of the encrypted security information into the application package comprises:
adding the encrypted security information to the application package; and
repackaging the application package.

11. A method of executing an application package comprising an executable file, a native library, and at least one file, the method comprising:
executing the executable file;
calling the native library; and
verifying integrity of the at least one file.

12. The method of claim 11, wherein the application package comprises:
a manifest file comprising a first hash value, the first hash value being a hash value of the at least one file;
a digest information file comprising a second hash value, the second hash value being a hash value of the manifest file;
a certificate file comprising a third hash value, the third hash value being a hash value of the digest information file and digitally signed using a private key; and
security information which comprises a public key corresponding to the private key, the security information being encrypted using an encryption key,
wherein the native library comprises encryption key information corresponding to the encryption key.

13. The method of claim 12, wherein the verifying of integrity comprises:
acquiring the encryption key by using the encryption key information;
decrypting the encrypted security information by using the acquired encryption key;
decrypting the third hash value by using the public key comprised in the decrypted security information; and
creating a fourth hash value by using the digest information file and comparing the fourth hash value with the decrypted third hash value.

14. The method of claim 13, wherein the verifying of integrity further comprises creating a fifth hash value by using the manifest file and comparing the fifth hash value with the second hash value.

15. The method of claim 13, wherein the verifying of integrity further comprises creating a fifth hash value by using the at least one file and comparing the fifth hash value with the first hash value.
